# EUROPEAN PATENT SPECIFICATION

(11) **EP 2 974 890 B1**
(45) Date of publication and mention of the grant of the patent: **23.10.2019**
(21) Application number: 15176479.2
(22) Date of filing: 13.07.2015
(51) Int. Cl.: B60C 13/02, B60C 17/00

(54) **RUN-FLAT TIRE**
NOTLAUFREIFEN
PNEU DE ROULAGE À PLAT

(30) Priority: 15.07.2014 JP 2014145428
(43) Date of publication of application: 20.01.2016
(73) Proprietor: Sumitomo Rubber Industries, Ltd., Kobe-shi, Hyogo 651-0072 (JP)
(72) Inventor: MORI, Souichirou, Kobe-shi,, Hyogo 651-0072 (JP)
(74) Representative: TBK

(56) References cited:
- EP-A1- 2 287 017
- EP-A1- 2 752 312
- WO-A1-2009/017167
- WO-A1-2014/024587
- JP-A- 2001 039 129
- JP-A- 2013 067 387

## Description

### Field of the Invention

The present invention relates to a run-flat tire that exhibits enhanced run-flat durability and riding comfort.

### Background Art

A run-flat tire has been proposed to have a sidewall that is provided with, for example, a side-reinforcing rubber layer with an approximately crescent-shaped cross section. During run-flat driving, such a side-reinforcing rubber layer of a run-flat tire warps significantly and generates heat. When run-flat driving continues, the side-reinforcing rubber layer is damaged due to the generated heat.

To increase run-flat continuous driving distance, a run-flat tire has been proposed to have protrusions that are raised on the axially outer side of the external surface of a sidewall and extend in a radius direction of the tire. Such protrusions increase the external surface area of the sidewall. In addition, such protrusions generate airflow around the sidewall while the tire is running. The airflow takes heat from the surface of the sidewall, thereby suppressing an increase in temperature in the side-reinforcing rubber layer. One of the proposals discloses a run-flat tire having the features defined in the preamble of claim 1 (cf. patent publication 3).

However, because of the protrusions, the sidewall of the above run-flat tire has uneven rigidity in a tire circumferential direction. Accordingly, problem factors such as components that cause periodic vibrations tend to arise, and riding comfort is thereby reduced.

### PRIOR ART PUBLICATION

### PATENT PUBLICATION

Patent publication 1: JP 2014-37214 A
Patent publication 2: WO 2009/017167 A1
Patent publication 3: EP 2 287 017 A1
Patent publication 4: WO 2014/024587 A1
Patent publication 5: JP 2001-039129 A

### SUMMARY OF THE INVENTION

### PROBLEMS TO BE SOLVED BY THE INVENTION

The present invention was carried out to solve the above-described problems. Its objective is to provide a run-flat tire that exhibits enhanced run-flat durability and riding comfort.

### SOLUTIONS TO THE PROBLEMS

An aspect of the present invention is a run-flat tire as defined in claim 1.

In the run-flat tire related to the present invention, the protrusions are each preferred to extend in an arc shape in the front view of the sidewall.

In the run-flat tire related to the present invention, the angle of the protrusions relative to a tire radial direction is preferred to gradually increase in a radially outward direction.

In the run-flat tire related to the present invention, the angle of the protrusions relative to a tire radial direction is preferred to be 30 to 50 degrees.

In the run-flat tire related to the present invention, the rotation direction of the tread is specified in advance, and the tire radially inner edge of a protrusion is preferred to be located on a forward side in the rotation direction than the radially outer edge of the protrusion.

In the run-flat tire related to the present invention, the raised height of each protrusion is preferred to be 0.5 to 4.0 mm.

In the run-flat tire related to the present invention, the width of a protrusion perpendicular to its longitudinal direction is preferred to be 0.5 to 4.0 mm.

### EFFECTS OF THE INVENTION

In the run-flat tire related to the present invention, multiple protrusions raised in an axially outward direction are arranged in a tire circumferential direction on the external surface of a sidewall. Such protrusions increase the external surface area of the sidewall. In addition, such protrusions generate airflow around the sidewall while the tire is running. The airflow takes heat from the surface of the sidewall, thereby suppressing an increase in temperature in the side-reinforcing rubber layer. Accordingly, run-flat durability is further enhanced. Further, by setting the length of protrusion in the radius direction to be 15 to 35% of the tire cross-sectional height, an excessive increase in the mass of the tire is suppressed. Accordingly, enhancement of run-flat durability and riding comfort is well-balanced.

The protrusions arranged on the sidewall each extend in a tire radial direction with an inclination angle. By so setting, the external surface area of the sidewall further increases, while airflow is generated to have a component in the rotation direction of the tire. Such airflow takes heat more effectively from the sidewall, thereby further enhancing run-flat durability.

Protrusions adjacent to each other in a tire circumferential direction are positioned to overlap each other in the circumferential direction. Accordingly, the circumferential rigidity of the sidewall becomes even, and riding comfort is thereby improved.

### BRIEF DESCRIPTION OF THE DRAWINGS

FIG. 1 is a meridian cross-sectional view of the left half of a run-flat tire according to an embodiment of the present invention;
FIG. 2 is a perspective view showing part of the tire in FIG. 1;
FIG. 3 is a front view showing a sidewall of the tire in FIG. 1;
FIG. 4 is a cross-sectional view of a protrusion perpendicular to its longitudinal direction;
FIGs. 5(a) and 5(b) are cross-sectional views each showing a protrusion according to other embodiments of the present invention;

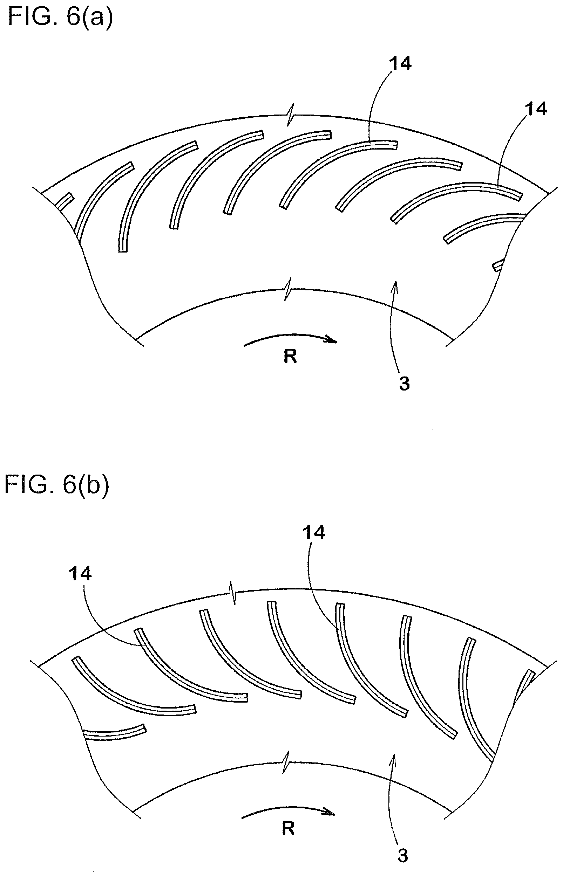

FIGs. 6(a) and 6(b) are front views each showing a sidewall according to yet other embodiments of the present invention; and

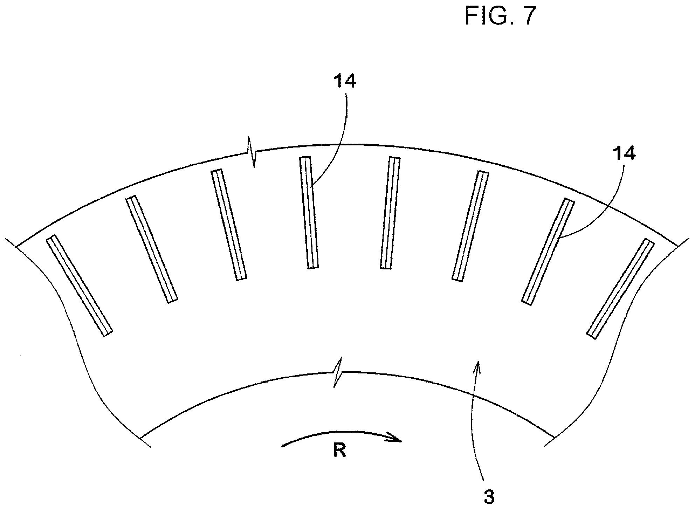

FIG. 7 is a front view showing a sidewall of a comparative example.

### DETAILED DESCRIPTION OF THE EMBODIMENTS

In the following, an embodiment of the present invention is described by referring to the accompanying drawings.

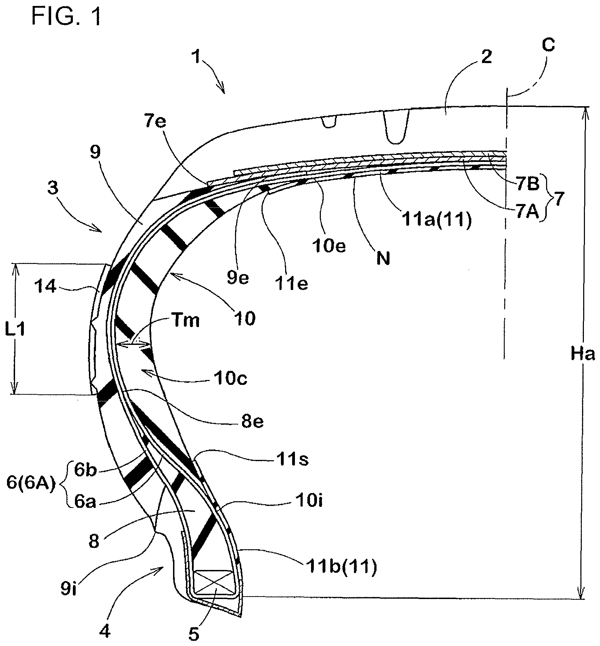

FIG. 1 is a meridian cross-sectional view of a run-flat tire according to the present embodiment (hereinafter may also be referred to as simply a "tire"), including a tire rotation axis under normal conditions of the tire.

Normal conditions mean that tire 1 is mounted on a normal rim (not shown), air is filled at a normal inflation pressure and no load is applied thereon. In the present application, dimensions and the like of the tire are determined under normal conditions unless otherwise specified.

The aforementioned "normal rim" indicates a rim regulated by a regulatory system that includes standards for the tire: it is specified as a "Normal Rim" by JATMA; "Design Rim" by TRA; and "Measuring Rim" by ETRTO. In addition, the "normal inflation pressure" above indicates air pressure regulated by a regulatory system that includes standards for the tire: it is specified as "Maximum Air Pressure" by JATMA, maximum value listed in the table "Tire Load Limits at Various Cold Inflation Pressures" by TRA, and "Inflation Pressure" by ETRTO.

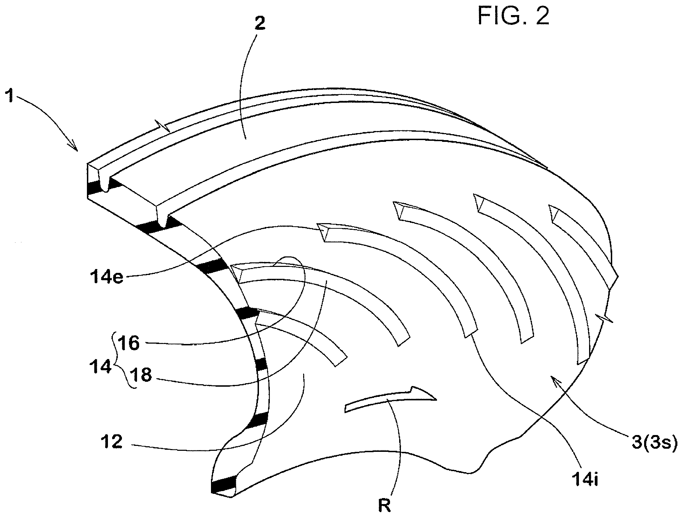

The rotation direction "R" (shown in FIG. 2) is specified for tire 1 of the present embodiment. The rotation direction "R" is marked by a character or the like on sidewall 3, for example.

As shown in FIG. 1, tire 1 of the present embodiment has carcass 6 that extends from tread 2 to bead core 5 of bead 4 through sidewall 3 on either side, and has belt layer 7 positioned on the radially outer side of carcass 6 and on the inner side of tread 2.

Carcass 6 is made of one carcass ply 6A, for example. Carcass ply 6A includes main portion 6A formed from tread 2 through sidewall 3 to reach bead core 5 of bead 4, and turn-up portion 6b that is connected to main portion 6A and turned up around bead core 5. However, that is not the only option for carcass ply 6A; for example, the edge (not shown) of main portion 6A may end at bead core 5 without turning up around bead core 5.

Carcass ply 6A contains carcass cords arranged to incline at an angle of, for example, 75 to 90 degrees, more preferably 80 to 90 degrees, relative to tire equator C. For the carcass cords, organic fiber cords such as nylon, polyester and rayon are preferred to be used. Bead apex rubber 8 made of hard rubber is provided between main portion 6a and turn-up portion 6b.

Belt layer 7 is made of two belt plies 7A, 7B, for example. Belt plies 7A, 7B each contain highly elastic belt cords made of, for example, steel cords or the like that incline at 15 to 40 degrees relative to tire equator C. To enhance high-speed durability, it is an option to provide, for example, a band layer (not shown) with band cords on the tire radially outer side of belt layer 7.

Tire 1 of the present embodiment has sidewall rubber 9 positioned on the tire axially outer side of carcass 6 in sidewall 3, side-reinforcing rubber layer 10 positioned on the inner side of carcass 6 in sidewall 3, and inner liner 11 that is made of air impermeable rubber and forms tire internal cavity surface N.

Side-reinforcing rubber layer 10 is shaped to have an approximately crescent-shaped cross section. In side-reinforcing rubber layer 10 of the present embodiment, the thickness gradually increases from tire radially inner edge 10i and outer edge 10e toward center 10c, which possesses the maximum thickness Tm. Inner edge 10i of side-reinforcing rubber layer 10 is positioned on the tire radially inner side of radially outer edge 8a of bead apex rubber 8. Outer edge 10e of side-reinforcing rubber layer 10 is positioned on the tire axially inner side of tire axially outer edge 7e of belt layer 7.

To enhance run-flat durability and riding comfort by reducing the heat generated during run-flat driving while maintaining run-flat properties, side-reinforcing rubber layer 10 is preferred to have a complex modulus of elasticity E* of approximately 6 to 12 MPa and a loss tangent tan σ of approximately 0.02 to 0.05.

In the present application, complex modulus of elasticity E* and loss tangent tan σ are the values measured by using a viscoelastic spectrometer according to the regulations specified in JIS-K6394 under the conditions below.
initial warping: 10%
amplitude: ±2%
frequency: 10 Hz
deformation mode: tensile
temperature: 70°C

In the present embodiment, inner liner 11 is divided into first portion 11a positioned in tread 2 and second portion 11b positioned in bead 4. Tire axially outer edge 11e of first portion 11a is positioned, for example, 5 to 15 mm on the axially outer side of outer edge 10e of side-reinforcing rubber layer 10. Tire radially outer edge 11s of second portion 11b is positioned, for example, 5 to 15 mm on the tire radially outer side of inner edge 10i of side-reinforcing rubber layer 10. Since the majority of side-reinforcing rubber layer 10 is not covered by such inner liner 11, lightweight tire 1 is achieved. Also, inner liner 11 does not hinder the heat generated in side-reinforcing rubber layer 10 from being discharged to the tire internal cavity.

Sidewall rubber 9 extends in tire radially inner and outer directions. In the present embodiment, tire radially outer edge 9e of sidewall rubber 9 is sandwiched by belt layer 7 and turn-up portion 6b. In addition, tire radially inner edge 9i of sidewall rubber 9 is positioned on the tire radially inner side of outer edge 8e of bead apex rubber 8, for example. Sidewall rubber 9 is made softer than bead apex rubber 8, for example, by using rubber having a complex modulus of elasticity E* of 1 to 10 MPa.

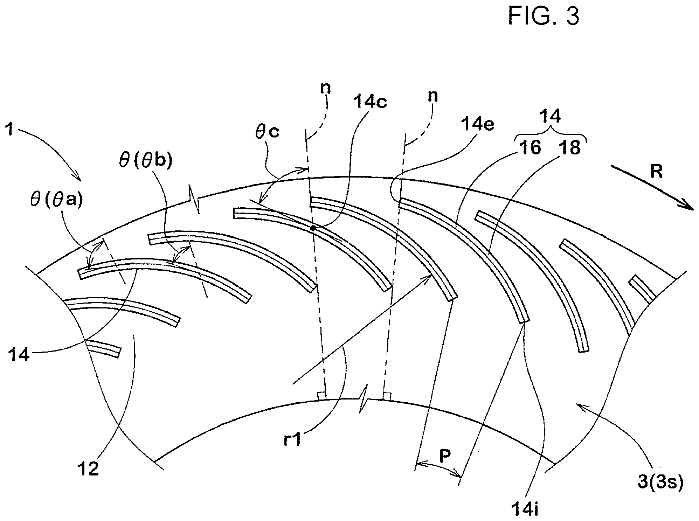

FIG. 2 is a perspective view showing part of tire 1. FIG. 3 is a front view of sidewall 3. As shown in FIGs. 2 and 3, external surface 3s of sidewall 3 is provided with base surface 12 and multiple protrusions 14 that are raised in a tire axially outward direction. Base surface 12 is a plane substantially parallel to the tire axially outer surface of main portion 6a of carcass 6. Base surface 12 is a smooth surface in the present embodiment. Base surface 12 may include serration (not shown) that is an aggregate of small ridges to conceal irregularities such as bulges and dents formed during the tire vulcanization process. Protrusions 14 protrude from base surface 12. Such protrusions 14 increase the external surface area of sidewall 3. In addition, since protrusions 14 generate airflow around sidewall 3 while the tire runs, heat on the external surface 3s of sidewall 3 is robbed, and the temperature rise in side-reinforcing rubber layer 10 (shown in FIG. 1) is thereby suppressed. Accordingly, run-flat durability is enhanced.

Protrusions 14 each extend to incline relative to a tire radial direction. Accordingly, the external surface area of sidewall 3 further increases, and airflow having a component along tire rotation direction R is generated. Such airflow further enhances run-flat durability by robbing heat more effectively from external surface 3s of sidewall 3.

Protrusions 14 each have the same inclination direction. As a result, airflows having a component along the tire rotation direction R are integrated to flow in the same direction. Accordingly, heat on external surface 3s of sidewall 3 is effectively taken away, and run-flat durability is further enhanced.

Protrusions 14 adjacent in a tire circumferential direction are positioned to overlap each other in a tire circumferential direction. For example, a tire radius-directional line N passing through the tire radially outer edge of a protrusion 14 crosses another protrusion 14 adjacent to that protrusion. Such positioning of protrusions 14 sets the rigidity of sidewall 3 to be uniform in a tire circumferential direction and enhances riding comfort accordingly.

The overlapping amounts of protrusions 14 are preferred to be the same along the entire circumferential direction. Namely, the number of protrusions 14 on a tire radius-directional line N is preferred to be the same along the entire circumferential direction. By so setting, the longitudinal rigidity of sidewall 3 is unified in a tire circumferential direction. To effectively rob heat from external surface 3s of sidewall 3 and to suppress the tire mass from increasing excessively, it is preferred that two or three protrusions 14 be formed on a tire radius-directional line N. In the present embodiment, two protrusions 14 are positioned on a tire radius direction line N.

Protrusion 14 of the present embodiment is formed to extend in an arc shape. Protrusion 14 in such a shape is capable of generating airflow in tire rotation direction R even more smoothly by using centrifugal force caused by the rotation of tire 1. As a result, heat is robbed even more effectively from external surface 3s of sidewall 3.

At radially center point 14c of protrusion 14, angle θc of protrusion 14 relative to a tire radial direction is preferred to be 30 to 50 degrees. If angle θc of protrusion 14 is smaller than 30 degrees, airflow having a component along the tire rotation direction may not be generated smoothly. On the other hand, if angle θc of protrusion 14 exceeds 50 degrees, airflow around sidewall 3 decreases and heat may not be effectively robbed from external surface 3s of sidewall 3.

Angle θa of protrusion 14 relative to a tire radius direction on the radially outer side is preferred to be greater than angle θb of protrusion 14 relative to a tire radius direction on the radially inner side. Accordingly, protrusion 14 is positioned more on the tire radially outer side of sidewall 3 where the circumferential length is greater than on the tire radially inner side of sidewall 3 where the circumferential length is shorter. Therefore, on both the radially inner and outer sides of external surface 3s of sidewall 3, heat is robbed quite evenly. As a result, run-flat durability is further enhanced.

To effectively achieve the above-described effects, angle θ of protrusion 14 relative to a tire radial direction is preferred to increase gradually in a radially outward direction. Namely, protrusion 14 extends in an arc shape protruding in a tire radially outward direction.

Along rotation direction R, tire radially inner edge 14i of a protrusion 14 is located on a forward side in the rotation direction than the radially outer edge 14e of the protrusion 14, for example. As a result, the airflow around sidewall 3 moves smoothly from the tire radially inner side toward the outer side as the tire rotates, and the heat at sidewall 3 is even more swiftly discharged. Thus, run-flat durability is further enhanced. Also, such protrusion 14 effectively reduces noise caused by airflow.

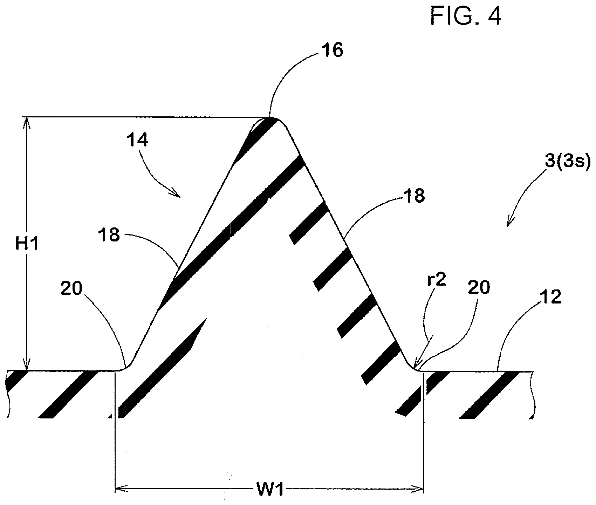

FIG. 4 is a cross-sectional view of protrusion 14 at a portion perpendicular to its longitudinal direction. As shown in FIG. 4, protrusion 14 is shaped to have an approximately triangular cross section with top portion 16 and side surfaces 18 formed on both sides of top portion 16. Protrusion 14 with such a shape increases the external surface area of sidewall 3 while suppressing an increase in the mass of tire 1. Thus, riding comfort and run-flat durability are enhanced.

Arc portion 20 smoothly connects side surface 18 to base surface 12 of sidewall 3. Accordingly, the rigidity between protrusion 14 and base surface 12 increases, thereby suppressing cracking or chipping, for example. To effectively achieve such effects, the curvature radius r2 of arc 20 is preferred to be 0.7 to 3.0 mm, for example.

Raised height HI of protrusion 14 is preferred to be 0.5 mm or greater, more preferably 1.5 mm or greater, even more preferably 2.0 mm or greater, further more preferably 2.5 mm or greater, and it is preferred to be 4.0 mm or less, more preferably 3.5 mm or less, even more preferably 3.0 mm or less. If raised height HI of protrusion 14 is less than 0.5 mm, airflow may not be generated sufficiently. If raised height HI of protrusion 14 exceeds 4.0 mm, the tire mass increases and riding comfort may decrease. To effectively achieve the aforementioned effects, width W1 of protrusion 14 perpendicular to its longitudinal direction is preferred to be 0.5 mm or greater, more preferably 1.5 mm or greater, even more preferably 2.0 mm or greater, further more preferably 2.5 mm or greater, and it is preferred to be 4.0 mm or less, more preferably 3.5 mm or less, even more preferably 3.0 mm or less.

As shown in FIG. 1, protrusion 14 is preferred to be positioned on the tire axially outer side of center 10c of side-reinforcing rubber layer 10, for example. Such a setting effectively reduces the temperature at the portion of external surface 3s of sidewall 3 where the temperature rises the most. Accordingly, run-flat durability is further enhanced.

Length L1 of protrusion 14 in a radius direction is 15 to 35% of tire cross-sectional height Ha. By so setting, heat is effectively robbed from external surface 3s of sidewall 3, while an excessive increase in the mass of tire 1 is suppressed. Accordingly, enhancement of run-flat durability and riding comfort is well-balanced.

It is sufficient if protrusions 14 with the aforementioned structure are formed at least on one sidewall 3 positioned on the inner side or the outer side of the vehicle, but it is preferable for protrusions 14 to be formed on sidewalls 3 on both sides. In addition, protrusions 14 are preferred to be formed continuously in a tire circumferential direction so as to form an annular pattern.

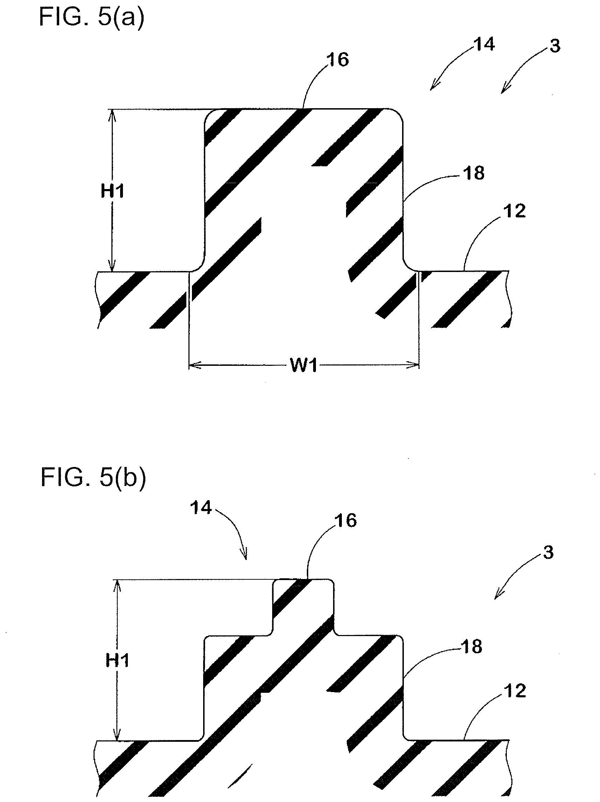

FIG. 5(a) is a cross-sectional view of protrusion 14 in another embodiment, taken at a portion perpendicular to its longitudinal direction. The protrusion 14 of another embodiment is shaped to have an approximately rectangular cross section at a portion perpendicular to the longitudinal direction. Such protrusion 14 increases the external surface area of sidewall 3 more than the protrusion 14 having a cross-sectional triangular shape does, thereby enhancing run-flat durability.

FIG. 5(b) is a cross-sectional view of protrusion 14 according to yet another embodiment, taken at a portion perpendicular to the longitudinal direction. In yet another embodiment, side surfaces 18 of protrusion 14 are formed in the shape of steps toward top portion 16. Since a protrusion 14 with such a shape can reduce the rubber volume compared with a protrusion 14 having an approximately rectangular cross-sectional shape, riding comfort is improved.

So far, the embodiments of the present invention have been described in detail. However, the present invention is not limited to those embodiments, and any other embodiment is possible to carry out the present invention.

### EXAMPLES

Run-flat tires in size 225/55R17 having the basic structure shown in FIG. 1 were prepared according to their respective specifications shown in Table 1. The run-flat durability and riding comfort of each test tire were checked. Common specifications of each test tire and test methods are mainly as follows:
complex modulus of elasticity E* of side-reinforcing rubber layer: 9.0 MPa
loss tangent tan σ of side-reinforcing rubber layer: 0.03
complex modulus of elasticity E* of sidewall rubber: 4.0 MPa
raised height HI of protrusion: 2.5 mm
width W1 of protrusion: 2.5 mm

The angles and pitches of protrusions are the same in Comparative Examples 2 and 3. Test methods are conducted as follows.

### <Run-flat Durability>

Using a drum-type running tester, each test tire was run under the conditions below to measure the running distance until abnormal noise occurred in the tire. The results are shown in indices based on the running distance of Comparative Example 1 being set as 100. The greater the value is, the better the durability is. The upper limit of running distance is 1.3 times the running distance in Comparative Example 1.
rim: 17×7JJ
speed: 80 km/h
inflation pressure: 0 kPa
longitudinal load: 5.2 kN
drum radius: 1.7 m

### <Riding Comfort>

Test tires were mounted on all the wheels of a domestic passenger car with a displacement of 3500 cc under the conditions below. The car was driven on a dry asphalt road of a test course, and the test driver conducted sensory evaluations on riding comfort regarding movement on springs, degree of hard touch, feeling of rigidity and the like. The results are shown in indices based on the result in Comparative Example 1 as 100. The greater the value is, the better the riding comfort is.
rim: 17×7JJ
inflation pressure: 230 kPa

The test results are shown in Table 1.

**Table 1**

| | Comparative Example 1 | Example 1 | Example 2 | Example 3 | Example 4 | Example 5 | Example 6 | Example 7 |
|---|---|---|---|---|---|---|---|---|
| FIG.: Showing Position, etc. of Protrusion | FIG. 7 | FIG. 3 | FIG. 3 | FIG. 3 | FIG. 3 | FIG. 3 | FIG. 6(a) | FIG. 6(b) |
| Angle (θ1) of Protrusion (°) | 0 | 20 | 30 | 40 | 50 | 60 | 40 | 40 |
| Run-flat Durability [index: the greater, the better] | 100 | 120 | 130 | 130 | 125 | 120 | 120 | 120 |
| Riding Comfort [index: the greater, the better] | 100 | 110 | 115 | 120 | 120 | 120 | 120 | 120 |

According to the test results, it was confirmed that run-flat durability and riding comfort were more greatly enhanced in the tires in the examples than in the tires in the comparative example. In addition, tires with different complex moduli of elasticity E* and loss tangent tan σ and tires having protrusions with different cross-sectional shapes were also tested. The test results show that tires in the examples were better, the same as the above results. Moreover, better results are obtained in a tire where raised height HI of a protrusion is 2.0 to 4.0 mm, width W1 of the protrusion is 2.0 to 4.0 mm and two or three protrusions are formed on a tire radius-directional line N; and even better results are obtained in a tire where raised height HI of a protrusion is 2.5 mm or greater and width W1 of the protrusion is 2.5 mm or greater.

### [DESCRIPTION OF NUMERICAL REFERENCES]

- 1: run-flat tire
- 3: sidewall
- 3s: external surface
- 10: side-reinforcing rubber layer
- 14: protrusion

## Claims

1. A run-flat tire (1), comprising:
a sidewall (3) having a side-reinforcing rubber layer (14) with an approximately crescent-shaped cross section,
wherein on the external surface (3s) of at least one sidewall (3), a plurality of protrusions (14) raised in a tire axially outward direction are arranged in a tire circumferential direction,
in a front view of the sidewall (3), the protrusions (14) each extend to incline relative to a tire radial direction, and
protrusions (14) adjacent to each other in a tire circumferential direction are positioned to overlap each other in a tire circumferential direction,
**characterized in that**
length (L1) of protrusion (14) in a radius direction is 15 to 35% of tire cross-sectional height (Ha).

2. The run-flat tire (1) according to Claim 1, wherein the protrusions (14) each extend in an arc shape in the front view of the sidewall (3).

3. The run-flat tire (1) according to Claim 1 or 2, wherein the angle of the protrusions (14) relative to a tire radial direction is set to increase gradually in a tire radially outward direction.

4. The run-flat tire (1) according to any of Claims 1 to 3, wherein the angle of the protrusions (14) relative to a tire radial direction is set to be 30 to 50 degrees.

5. The run-flat tire (1) according to any of Claims 1 to 4, wherein the rotation direction of the tread (2) is specified in advance, and the tire radially inner edge of a protrusion is located on a forward side in the rotation direction than the radially outer edge of the protrusion.

6. The run-flat tire (1) according to any of Claims 1 to 5, wherein the raised height of each protrusion (14) is set to be 0.5 to 4.0 mm.

7. The run-flat tire (1) according to any of Claims 1 to 6, wherein the width of a protrusion (14) perpendicular to its longitudinal direction is set at 0.5 to 4.0 mm.

## Patentansprüche

1. Run-Flat-Reifen (1), der Folgendes aufweist:
eine Seitenwand (3) mit einer seitenverstärkenden Gummischicht (14) mit einem etwa halbmondförmigen Querschnitt,
wobei auf der Außenfläche (3s) mindestens einer Seitenwand (3) eine Vielzahl von Vorsprüngen (14), die in einer Reifenaxialrichtung nach außen erhaben sind, in einer Reifenumfangsrichtung angeordnet sind,
die Vorsprünge (14) sich in einer Vorderansicht der Seitenwand (3) jeweils so erstrecken, dass sie sich relativ zu einer radialen Reifenrichtung neigen, und
Vorsprünge (14), die in einer Reifenumfangsrichtung aneinander angrenzen,
so positioniert sind, dass sie sich in einer Reifenumfangsrichtung überlappen,
**dadurch gekennzeichnet, dass**
die Länge (L1) des Vorsprungs (14) in einer Radiusrichtung 15 bis 35% der Reifenquerschnittshöhe (Ha) beträgt.

2. Run-Flat-Reifen (1) nach Anspruch 1, wobei sich die Vorsprünge (14) jeweils in der Vorderansicht der Seitenwand (3) in Bogenform erstrecken.

3. Run-Flat-Reifen (1) nach Anspruch 1 oder 2, wobei der Winkel der Vorsprünge (14) in Bezug auf eine radiale Reifenrichtung so eingestellt ist, um sich in einer Radialauswärtsrichtung des Reifens allmählich zu erhöhen.

4. Run-Flat-Reifen (1) nach einem der Ansprüche 1 bis 3, wobei der Winkel der Vorsprünge (14) in Bezug auf eine radiale Reifenrichtung auf 30 bis 50 Grad eingestellt ist.

5. Run-Flat-Reifen (1) nach einem der Ansprüche 1 bis 4, wobei die Drehrichtung der Lauffläche (2) im Voraus festgelegt ist und sich die radiale Innenkante eines Vorsprungs weiter auf einer vorderen Seite in Drehrichtung als die radiale Außenkante des Vorsprungs befindet.

6. Run-Flat-Reifen (1) nach einem der Ansprüche 1 bis 5, wobei die erhabene Höhe jedes Vorsprungs (14) auf 0,5 bis 4,0 mm eingestellt ist.

7. Run-Flat-Reifen (1) nach einem der Ansprüche 1 bis 6, wobei die Breite eines Vorsprungs (14) senkrecht zu seiner Längsrichtung auf 0,5 bis 4,0 mm eingestellt ist.

## Revendications

1. Pneu de roulage à plat (1), comprenant :
un flanc (3) ayant une couche de caoutchouc de renforcement latéral (14) présentant une section transversale approximativement en forme de croissant,
dans lequel sur la surface externe (3s) d'au moins un flanc (3), une pluralité de saillies (14) surélevées dans une direction axialement vers l'extérieur de pneu sont agencées dans une direction circonférentielle de pneu,
dans une vue de face du flanc (3), les saillies (14) s'étendent chacune pour s'incliner par rapport à une direction radiale de pneu, et
des saillies (14) adjacentes entre elles dans une direction circonférentielle de pneu sont positionnées pour se chevaucher dans une direction circonférentielle de pneu,
**caractérisé en ce que**
une longueur (L1) de saillie (14) dans une direction de rayon fait de 15 à 35 % d'une hauteur en section transversale de pneu (Ha).

2. Pneu de roulage à plat (1) selon la revendication 1, dans lequel les saillies (14) s'étendent chacune en une forme d'arc dans la vue de face du flanc (3).

3. Pneu de roulage à plat (1) selon la revendication 1 ou 2, dans lequel l'angle des saillies (14) par rapport à une direction radiale de pneu est réglé pour augmenter progressivement dans une direction radialement vers l'extérieur de pneu.

4. Pneu de roulage à plat (1) selon l'une quelconque des revendications 1 à 3, dans lequel l'angle des saillies (14) par rapport à une direction radiale de pneu est réglé pour faire de 30 à 50 degrés.

5. Pneu de roulage à plat (1) selon l'une quelconque des revendications 1 à 4, dans lequel la direction de rotation de la bande de roulement (2) est spécifiée à l'avance, et le bord radialement intérieur de pneu d'une saillie est situé sur un côté avant dans la direction de rotation par rapport au bord radialement extérieur de la saillie.

6. Pneu de roulage à plat (1) selon l'une quelconque des revendications 1 à 5, dans lequel la hauteur surélevée de chaque saillie (14) est réglée pour faire de 0,5 à 4,0 mm.

7. Pneu de roulage à plat (1) selon l'une quelconque des revendications 1 à 6, dans lequel la largeur d'une saillie (14) perpendiculaire à sa direction longitudinale est réglée de 0,5 à 4,0 mm.
